# EUROPEAN PATENT SPECIFICATION

(11) **EP 2 998 659 B1**
(45) Date of publication and mention of the grant of the patent: **07.03.2018**
(21) Application number: 13884634.0
(22) Date of filing: 18.12.2013
(51) Int. Cl.: F24F 11/00, F24F 1/40, F24F 1/38

(54) **METHOD FOR CONTROLLING OUTDOOR FAN MOTOR OF AIR CONDITIONER**
VERFAHREN ZUR STEUERUNG DES AUSSENLÜFTERMOTORS EINER KLIMAANLAGE
PROCÉDÉ DE COMMANDE DE MOTEUR DE VENTILATEUR EXTÉRIEUR DE CLIMATISEUR

(30) Priority: 14.05.2013 CN 201310178722
(43) Date of publication of application: 23.03.2016
(73) Proprietor: Gree Electric Appliances, Inc. of Zhuhai, Zhuhai, Guangdong 519070 (CN)
(72) Inventor: FU, Shenggen, Zhuhai City Guangdong 519070 (CN); SU, Yuhai, Zhuhai City Guangdong 519070 (CN); JIN, Guohua, Zhuhai City Guangdong 519070 (CN); WU, Gui, Zhuhai City Guangdong 519070 (CN); WANG, Wencan, Zhuhai City Guangdong 519070 (CN); WANG, Zhihua, Zhuhai City Guangdong 519070 (CN)
(74) Representative: Ferroni, Filippo
(86) International application number: PCT/CN2013/089824
(87) International publication number: WO 2014/183437

(56) References cited:
- EP-A1- 2 148 095
- WO-A1-2012/043376
- CN-A- 102 788 405
- FR-A1- 2 835 598
- JP-A- H0 763 404
- JP-A- H08 136 035
- JP-A- H08 291 923
- JP-A- 2000 002 477
- US-A1- 2009 308 941

## Description

### TECHNICAL FIELD

The present disclosure relates to a method for controlling an air conditioner, more particularly, to a method for controlling outdoor fan motors of an air conditioner.

### BACKGROUND

In the prior art, a side-air-outlet outdoor unit of a multi-split air conditioner is commonly provided with an upper outdoor fan, a lower outdoor fan, an upper outdoor fan motor for driving the upper outdoor fan to rotate, a lower outdoor fan motor for driving the lower outdoor fan to rotate, and a controller for controlling the upper outdoor fan motor and the lower outdoor fan motor. Currently, the frequency of the upper outdoor fan motor and that of the lower outdoor fan motor are identical at the same time instant, thus, when the upper outdoor fan motor and the lower outdoor fan motor run simultaneously, vibrations acting on the structural components of the outdoor unit are identical in direction and in phase, which results in the sympathetic vibration and louder noises. When the upper outdoor fan motor and the lower outdoor fan motor run at different speeds, although the vibration phases are not consistent, the phase difference will be reduced with time; once the varying vibration phases become consistent, the sympathetic vibration on the structural components will be formed, and noises are generated. What's more, once the sympathetic vibration is formed, the vibrations acting on the structural components by the upper outdoor fan motor and the lower outdoor fan motor will reinforce each other, and the motors will not release themselves out of the sympathetic vibration. Consequently the noises will always continue and affect users. Furthermore, if the upper outdoor fan motor and the lower outdoor fan motor run at the same frequency simultaneously, the total running frequency range of the two outdoor fan motors will be too small to realize a precise control for the fan motors.

Document EP 2 148 095 discloses the preamble of claim 1.

### SUMMARY

The technical problem to be solved by the present disclosure is to provide a method for controlling outdoor fan motors of an air conditioner, so as to reduce the noises generated during the operation of the units, widen the regulating range of the working frequency of the motors, and precisely regulate the air volume.

In order to solve the technical problem above, the present disclosure provides a method for controlling outdoor fan motors of an air conditioner. The air conditioner comprises a first outdoor fan and a second outdoor fan, which are used in the outdoor heat exchanger for performing heat exchange. The control method comprises the following steps:
determining a required rotation speed V1 of the first outdoor fan motor and a required rotation speed V2 of the second outdoor fan motor according to running states of the air conditioner; outputting a first control signal to the first outdoor fan motor for a working frequency f1 corresponding to the required rotation speed V1, so as to control the first outdoor fan motor to rotate; outputting a second control signal to the second outdoor fan motor for a working frequency f2 corresponding to the required rotation speed V2, so as to control the second outdoor fan motor to rotate; wherein, the working frequency f1 and the working frequency f2 are different at a same time instant;
measuring air exhaust pressure P1 in a cooling state of the air conditioner or air suction pressure P2 in a heating state of the air conditioner;
comparing the air exhaust pressure P1 measured or the air suction pressure P2 measured with a preset pressure, and controlling the rotation speed of the first outdoor fan motor and the rotation speed of the second outdoor fan motor according to a pressure comparison result.

In one of the embodiments, at a same time instant, the difference between the working frequency f1 and the working frequency f2 is at least 1Hz.

In one of the embodiments, the step of controlling the rotation speed of the first outdoor fan motor and the rotation speed of the second outdoor fan motor comprises following processes:
comparing the air exhaust pressure P1 measured with a first preset pressure ranged within a range of [A1, B1], or comparing the air suction pressure P2 measured with a second preset pressure ranged within a range of [A2, B2];
when P1<A1, or p2 > B2, reducing the rotation speed of the first outdoor fan motor and the rotation speed of the second outdoor fan motor;
when P1>B1, or p2 ≤ A2, increasing the rotation speed of the first outdoor fan motor and the rotation speed of the second outdoor fan motor.

In one of the embodiments, the step of reducing the rotation speed of the first outdoor fan motor and the rotation speed of the second outdoor fan motor comprises following processes:
judging whether the second outdoor fan motor stops running or not;
if the second outdoor fan motor stops running, reducing the rotation speed of the first outdoor fan motor;
if the second outdoor fan motor does not stop running, further judging whether the working frequency f2 of the second outdoor fan motor is less than a working frequency fm or not: if yes, increasing the working frequency f1 of the first outdoor fan motor to a working frequency fn, and controlling the second outdoor fan motor to stop running simultaneously; if not, reducing the working frequency f1 of the first outdoor fan motor and the working frequency f2 of the second outdoor fan motor.

In one of the embodiments, K₂ ≤ fm ≤ K₂+5H_{z}, and K₂ is the minimum rated working frequency of the second outdoor fan motor.

In one of the embodiments, 2 × fm ≤ fn ≤ 2 × fm+5 H_{z}.

In one of the embodiments, the step of increasing the rotation speed of the first outdoor fan motor and the rotation speed of the second outdoor fan motor comprises following processes:
judging whether the second outdoor fan motor stops running or not;
if the second outdoor fan motor stops running, further judging whether the working frequency f1 of the first outdoor fan motor is larger than a working frequency fp or not: if yes, reducing the working frequency f1 of the first outdoor fan motor to the working frequency fq and controlling the second outdoor fan motor to run simultaneously; if not, increasing the working frequency f1 of the first outdoor fan motor;
if the second outdoor fan motor does not stop running, increasing the working frequency f1 of the first outdoor fan motor and the working frequency f2 of the second outdoor fan motor.

In one of the embodiments, 2K₁ ≤ fp ≤ 2K₁+10H_{z}, and K₁ is the minimum rated working frequency of the first outdoor fan motor.

In one of the embodiments, K₁ ≤ fq ≤ K₁+5 H_{z}, and K₁ is the minimum rated working frequency of the first outdoor fan motor.

In one of the embodiments, the method further comprises following steps:
measuring actual rotation speed V1' of the first outdoor fan motor and actual rotation speed V2' of the second outdoor fan motor;
comparing the actual rotation speed V1' with the required rotation speed V1, and controlling the rotation speed of the first outdoor fan motor according to a first speed comparison result; comparing the actual rotation speed V2' with the required rotation speed V2, and controlling the rotation speed of the second outdoor fan motor according to a second speed comparison result.

As compared with the prior art control methods, since the first outdoor fan motor and the second outdoor fan motor have different frequencies and are controlled separately, the method for controlling outdoor fan motors of an air conditioner of the present disclosure has the following advantages:
1. As the first outdoor fan motor and the second outdoor fan motor have different frequencies and are controlled separately, the vibration phases of the two motors will never be consistent. Based on the superposition principle of waves, the sympathetic vibration (namely, the resonance) will never be formed. What's more, the vibrations acting on the structural components will be weakened due to normally opposite phases. Therefore the method of the present disclosure could not only eliminate the resonance noises, but also reduce the magnitudes of the noises to some extent.
2. Since the first outdoor fan motor and the second outdoor fan motor have different frequencies, the running frequency range can be widened. Suppose that the running frequency range of a motor is [X, Y], if two motors run at the consistent frequency, the total running frequency range is [2X, 2Y]; if two motors run at different frequencies, the total running frequency range is [X, 2Y].
3. As the present disclosure has a wider running frequency range, advanced automatic control methods could be adopted to precisely regulate the frequency of the motors, to control the pressure and the temperature of the units within a reasonable range, and to stabilize the operation effects of the units.

### BRIEF DESCRIPTION OF THE DRAWINGS

Fig. 1 is a control schematic diagram for the outdoor fan motors of an air conditioner of the present disclosure;
Fig. 2 is a flow chart illustrating the method for controlling outdoor fan motors of an air conditioner of the present disclosure.

### DETAILED DESCRIPTION OF THE PREFERRED EMBODIMENTS

The present disclosure will be described in more details with reference to the accompanying figures and embodiments. It should be noted that various embodiments and the features thereof can be combined with each other under the condition of no conflict.

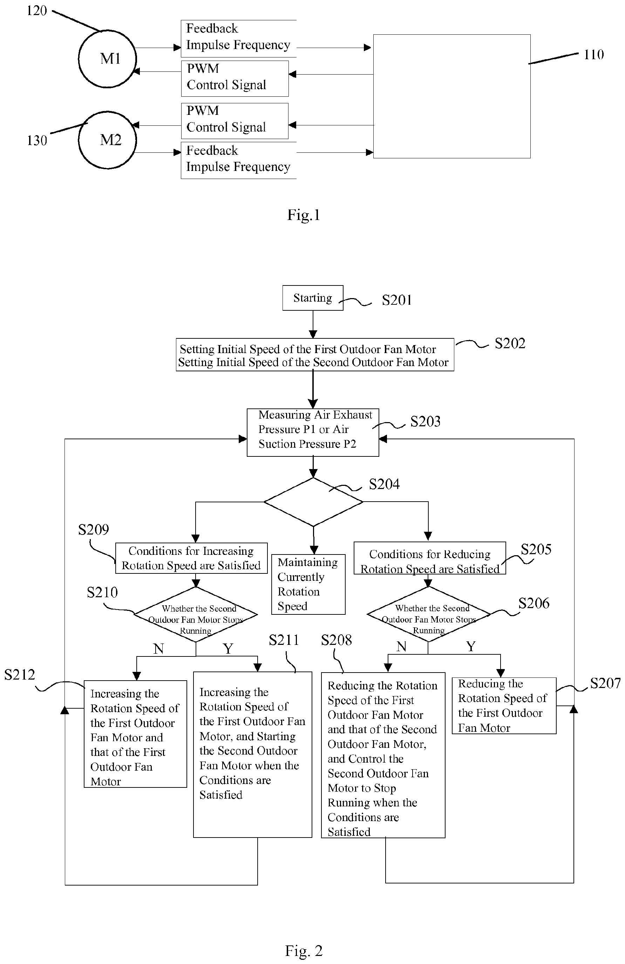

As shown in Fig. 1, which is a control schematic diagram for the outdoor fan motors of the air conditioner of the present disclosure, in order to obtain different frequencies and realize the separate control, the controller 110 of the present disclosure includes a first control circuit and a second control circuit, which are independent from each other. The first control circuit outputs PWM control signals to drive the first outdoor fan motor 120, acquires the feedback impulse frequency corresponding to the rotation speed of the first outdoor fan motor 120, and measures the actual rotation speed of the first outdoor fan motor 120, so as to perform a closed-loop feedback control for the rotation speed of the first outdoor fan motor 120, and precisely stabilize the rotation speed. Separately, the second control circuit outputs PWM control signals to drive the second outdoor fan motor 130, acquires the feedback impulse frequency corresponding to the rotation speed of the second outdoor fan motor 130, and measures the actual rotation speed of the second outdoor fan motor 130, so as to perform a closed-loop feedback control for the rotation speed of the second outdoor fan motor 130, and precisely stabilize the rotation speed. In this embodiment, the first outdoor fan motor 120 drives the upper outdoor fan to rotate, and the second outdoor fan motor 130 drives the lower outdoor fan to rotate.

Fig. 2 is a flow chart illustrating the method for controlling outdoor fan motors of the air conditioner.

Step S201: The user firstly selects running information such as a desired operation mode (cooling mode or heating mode), desired temperature, desired air volume and so on through an input device such as a remote control. The selected running information is input into the controller 110.

Step S202: According to the running states of the air conditioner, such as the operation mode, the temperature and the air volume and so on, the controller 110 determines the required rotation speed V1 of the first outdoor fan motor 120 and the required rotation speed V2 of the second outdoor fan motor 130. The first control circuit of the controller 110 outputs a control signal to the first outdoor fan motor 120 for controlling the working frequency f1 corresponding to the required rotation speed V1, so as to control the first outdoor fan motor 120 to rotate. The second control circuit of the controller 110 outputs a control signal to the second outdoor fan motor 130 for controlling the working frequency f2 corresponding to the required rotation speed V2, so as to control the second outdoor fan motor 130 to rotate. Wherein, the working frequency f1 and the working frequency f2 are different at a same time instant. Preferably, at the same time instant, the difference between the working frequency f1 and the working frequency f2 is at least 1Hz.

Step S203: During the operation of the air conditioner, the pressure transducer measures the air exhaust pressure P1 in a cooling state of the air conditioner or the air suction pressure P2 in a heating state of the air conditioner.

Step S204: Compare the air exhaust pressure P1 measured with a first preset pressure (supposing that the air exhaust pressure should be maintained within the range of [A1, B1] in the cooling state of the air conditioner), or compare the air suction pressure P2 measured with a second preset pressure (supposing that the air suction pressure P2 should be maintained within the range of [A2, B2] in the heating state of the air conditioner), and control the rotation speed of the first outdoor fan motor 120 and the rotation speed of the second outdoor fan motor 130 according to the pressure comparison result, so as to ensure the pressure of the air conditioner within a reliable range.

Step S205: When P1<A1, or p2 > B2, reduce the rotation speed of the first outdoor fan motor 120 and the rotation speed of the second outdoor fan motor 130. If a low rotation speed is required, the user may only control the first outdoor fan motor 120 to run and control the second outdoor fan motor 130 to stop running. In order to avoid causing instability of the air conditioner due to larger variation of the air volume, a first transient period is arranged between the two-motor running state and the only-one-motor running state. The control process during the first transient period includes the following steps:
step S206: judging whether the second outdoor fan motor 130 stops running or not;
step S207: if yes, reducing the rotation speed of the first outdoor fan motor 120 directly;
step S208: if not, further judging whether the working frequency f2 of the second outdoor fan motor 130 is less than a working frequency fm or not (preferably, wherein, K₂ ≤ fm ≤ K₂+5H_{Z}, and K₂ is the minimum rated working frequency of the second outdoor fan motor 130): if yes, increasing the working frequency f1 of the first outdoor fan motor 120 to a working frequency fn (preferably, 2 × fm ≤ fn ≤ 2 × fm+5 H_{Z}), and controlling the second outdoor fan motor 130 to stop running; if not, reducing the working frequency f1 of the first outdoor fan motor 120 and the working frequency f2 of the second outdoor fan motor 130.

Accordingly, during the transient period from the two-motor running state to the only-one-motor running state, the working frequency of the first outdoor fan motor 120 is increased to some extent so as to avoid the instability of the air conditioner due to larger variation of the air volume.

Step S209: When P1>B1, or P2≤A2, increase the rotation speed of the first outdoor fan motor 120 and the rotation speed of the second outdoor fan motor 130. Likewise, in order to avoid causing instability of the air conditioner due to larger variation of the air volume, a second transient period is arranged between the only-one-motor running state and the two-motor running state. The control process during the second transient period includes the following steps:
step S210: judging whether the second outdoor fan motor 130 stops running or not;
step S211: if the second outdoor fan motor 130 stops running, further judging whether the working frequency f1 of the first outdoor fan motor 120 is larger than a working frequency fp or not (preferably, wherein, 2 × K₁ ≤ fp ≤2 × K₁+10H_{Z}, and K₁ is the minimum rated working frequency of the first outdoor fan motor 120): if yes, reducing the working frequency f1 of the first outdoor fan motor 120 to a working frequency fq (preferably, wherein, K₁ ≤ fq ≤ K₁ +5 H_{Z}, and K₁ is the minimum rated working frequency of the first outdoor fan motor 120), and controlling the second outdoor fan motor 130 to run; if not, increasing the working frequency f1 of the first outdoor fan motor 120;
step S212: if the second outdoor fan motor 130 does not stop running, increasing the working frequency f1 of the first outdoor fan motor 120 and the working frequency f2 of the second outdoor fan motor 130.

Preferably, in this embodiment, the method for controlling outdoor fan motors of the air conditioner further includes the steps as follows:
measuring the actual rotation speed V1' of the first outdoor fan motor and the actual rotation speed V2' of the second outdoor fan motor;
comparing the actual rotation speed V1' with the required rotation speed V1, and controlling the rotation speed of the first outdoor fan motor according to the first speed comparison result; comparing the actual rotation speed V2' with the required rotation speed V2, and controlling the rotation speed of the second outdoor fan motor according to the second speed comparison result.

Through measuring the actual rotation speed of the first outdoor fan motor 120 and the actual rotation speed of the second outdoor fan motor 130, the controller performs the closed-loop feedback controls to stabilize the rotation speed of the motors precisely.

As described above, according to the method for controlling outdoor fan motors of an air conditioner of the present disclosure, the first outdoor fan motor 120 and the second outdoor fan motor 130 have different frequencies and are controlled separately, therefore the noises generated during the operation of the units of the air conditioner are reduced, and the running frequency range of the motors is widened, so that the air volume can be more precisely regulated, the pressure and the temperature of the units are controlled within a reasonable range, and the operation effect of the units is stabilized.

What described above are several embodiments of the present invention, and these embodiments are specific and in details, but not intended to limit the scope of the present invention. It will be understood by those skilled in the prior art that various modifications and improvements can be made without departing from the scope of the present invention. Therefore, the scope of the present invention is defined by the appending claims.

## Claims

1. A method for controlling outdoor fan motors of an air conditioner, the air conditioner comprises a first outdoor fan motor and a second outdoor fan motor, wherein, the method comprises following steps:
determining a required rotation speed V1 of the first outdoor fan motor and a required rotation speed V2 of the second outdoor fan motor according to running states of the air conditioner; outputting a first control signal to the first outdoor fan motor for a working frequency f1 corresponding to the required rotation speed V1, so as to control the first outdoor fan motor to rotate; outputting a second control signal to the second outdoor fan motor for a working frequency f2 corresponding to the required rotation speed V2, so as to control the second outdoor fan motor to rotate; **characterized in that** the working frequency f1 and the working frequency f2 are different at a same time instant; and **in that** the method further comprises the steps of:
measuring air exhaust pressure P1 in a cooling state of the air conditioner or air suction pressure P2 in a heating state of the air conditioner.
comparing the air exhaust pressure P1 measured or the air suction pressure P2 measured with a preset pressure, and controlling the rotation speed of the first outdoor fan motor and the rotation speed of the second outdoor fan motor according to a pressure comparison result.

2. The method for controlling outdoor fan motors of an air conditioner according to claim 1, wherein, at a same time instant, a difference between the working frequency f1 and the working frequency f2 is at least 1Hz.

3. The method for controlling outdoor fan motors of an air conditioner according to claim 1, wherein, the step of controlling the rotation speed of the first outdoor fan motor and the rotation speed of the second outdoor fan motor comprises following processes:
comparing the air exhaust pressure P1 measured with a first preset pressure ranged within a range of [A1, B1], or comparing the air suction pressure P2 measured with a second preset pressure ranged within a range of [A2, B2];
when P1<A1, or P2 > B2, reducing the rotation speed of the first outdoor fan motor and the rotation speed of the second outdoor fan motor;
when P1>B1, or P2≤A2, increasing the rotation speed of the first outdoor fan motor and the rotation speed of the second outdoor fan motor.

4. The method for controlling outdoor fan motors of an air conditioner according to claim 3, wherein, the step of reducing the rotation speed of the first outdoor fan motor and the rotation speed of the second outdoor fan motor comprises following processes:
judging whether the second outdoor fan motor stops running or not;
if the second outdoor fan motor stops running, reducing the rotation speed of the first outdoor fan motor;
if the second outdoor fan motor does not stops running, further judging whether the working frequency f2 of the second outdoor fan motor is less than a working frequency fm or not: if yes, increasing the working frequency f1 of the first outdoor fan motor to a working frequency fn, and controlling the second outdoor fan motor to stop running simultaneously; if not, reducing the working frequency f1 of the first outdoor fan motor and the working frequency f2 of the second outdoor fan motor.

5. The method for controlling outdoor fan motors of an air conditioner according to claim 4, wherein, K₂ ≤ fm ≤K₂+5H_{Z}, and K₂ is the minimum rated working frequency of the second outdoor fan motor.

6. The method for controlling outdoor fan motors of an air conditioner according to claim 4, wherein, 2 × fm ≤ fn ≤ 2 × fm+5 H_{Z}.

7. The method for controlling outdoor fan motors of an air conditioner according to claim 3, wherein, the step of increasing the rotation speed of the first outdoor fan motor and the rotation speed of the second outdoor fan motor comprises following processes:
judging whether the second outdoor fan motor stops running or not;
if the second outdoor fan motor stops running, further judging whether the working frequency f1 of the first outdoor fan motor is larger than a working frequency fp or not: if yes, reducing the working frequency f1 of the first outdoor fan motor to the working frequency fq and controlling the second outdoor fan motor to run simultaneously; if not, increasing the working frequency f1 of the first outdoor fan motor;
if the second outdoor fan motor does not stop running, increasing the working frequency f1 of the first outdoor fan motor and the working frequency f2 of the second outdoor fan motor.

8. The method for controlling outdoor fan motors of an air conditioner according to claim 7, wherein, 2K₁ ≤ fp ≤ 2K₁+10H_{Z}, and K₁ is the minimum rated working frequency of the first outdoor fan motor.

9. The method for controlling outdoor fan motors of an air conditioner according to claim 7, wherein, K₁ ≤ fq ≤ K₁+5 H_{Z}, and K₁ is the minimum rated working frequency of the first outdoor fan motor.

10. The method for controlling outdoor fan motors of an air conditioner according to claim 1, wherein, the method further comprises following processes:
measuring an actual rotation speed V1' of the first outdoor fan motor and an actual rotation speed V2' of the second outdoor fan motor;
comparing the actual rotation speed V1' with the required rotation speed V1, and controlling the rotation speed of the first outdoor fan motor according to a first speed comparison result; comparing the actual rotation speed V2' with the required rotation speed V2, and controlling the rotation speed of the second outdoor fan motor according to a second speed comparison result.

## Patentansprüche

1. Verfahren zum Steuern von Außenlüftermotoren einer Klimaanlage, wobei die Klimaanlage einen ersten Außenlüftermotor und einen zweiten Außenlüftermotor umfasst, wobei das Verfahren die folgenden Schritte umfasst:
Bestimmen einer erforderlichen Drehzahl V1 des ersten Außenlüftermotors und einer erforderlichen Drehzahl V2 des zweiten Außenlüftermotors entsprechend den Betriebszuständen der Klimaanlage; Ausgeben eines ersten Steuersignals an den ersten Außenlüftermotor für eine Arbeitsfrequenz f1, die der geforderten Drehzahl V1 entspricht, um den ersten Außenlüftermotor zu steuern, um zu drehen; Ausgeben eines zweiten Steuersignals an den zweiten Außenlüftermotor für eine Arbeitsfrequenz f2, die der geforderten Drehzahl V2 entspricht, um den zweiten Außenlüftermotor zu steuern, um zu drehen;
**dadurch gekennzeichnet, dass**
die Arbeitsfrequenz f1 und die Arbeitsfrequenz f2 zur gleichen Zeit unterschiedlich sind;
und dadurch, dass das Verfahren ferner die Schritte umfasst:
Messen eines Luftauslassdrucks P1 in einem Kühlzustand der Klimaanlage oder eines Luftansaugdrucks P2 in einem Heizzustand der Klimaanlage;
Vergleichen des gemessenen Luftauslassdrucks P1 oder des gemessenen Luftansaugdrucks P2 mit einem vorbestimmten Druck und Steuern der Rotationsgeschwindigkeit des ersten Außenlüftermotors und der Rotationsgeschwindigkeit des zweiten Außenlüftermotors gemäß einem Druckvergleichsergebnis.

2. Verfahren zum Steuern von Außenlüftermotoren einer Klimaanlage nach Anspruch 1, wobei ein Unterschied zwischen der Arbeitsfrequenz f1 und der Arbeitsfrequenz f2 mindestens 1 Hz zur gleichen Zeit ist.

3. Verfahren zum Steuern von Außenlüftermotoren einer Klimaanlage nach Anspruch 1, wobei der Schritt des Steuerns der Drehzahl des ersten Außenlüftermotors und der Drehzahl des zweiten Außenlüftermotors die folgenden Prozesse umfasst:
Vergleichen des gemessenen Luftauslassdrucks P1 mit einem ersten vorbestimmten Druckbereich innerhalb eines Bereichs von [A1, B1] oder Vergleichen des gemessenen Luftansaugdrucks P2 mit einem zweiten vorbestimmten Druckbereich innerhalb des Bereichs von [A2, B2];
wenn P1 < A1 oder P2 > B2, Reduzieren der Drehzahl des ersten Außenlüftermotors und der Drehzahl des zweiten Außenlüftermotors;
wenn P1 > B1 oder P2 ≤ A2, Erhöhen der Drehzahl des ersten Außenlüftermotors und der Drehzahl des zweiten Außenlüftermotors.

4. Verfahren zum Steuern von Außenlüftermotoren einer Klimaanlage nach Anspruch 3, wobei der Schritt des Reduzierens der Drehzahl des ersten Außenlüftermotors und der Drehzahl des zweiten Außenlüftermotors die folgenden Prozesse umfasst:
Beurteilen, ob der zweite Außenlüftermotor aufhört zu laufen oder nicht;
wenn der zweite Außenlüftermotor aufhört zu laufen, Reduzieren der Drehzahl des ersten Außenlüftermotors;
wenn der zweite Außenlüftermotor nicht aufhört zu laufen, weiteres Beurteilen, ob die Arbeitsfrequenz f2 des zweiten Außenlüftermotors geringer als die Arbeitsfrequenz fm ist oder nicht: wenn ja, Erhöhen der Arbeitsfrequenz f1 des ersten Außenlüftermotors auf eine Arbeitsfrequenz fn und Steuern des zweiten Außenlüftermotors, um gleichzeitig aufzuhören zu laufen; wenn nicht, Reduzieren der Arbeitsfrequenz f1 des ersten Außenlüftermotors und der Arbeitsfrequenz f2 des zweiten Außenlüftermotors.

5. Verfahren zum Steuern von Außenlüftermotoren einer Klimaanlage nach Anspruch 4, wobei K₂ ≤ fm ≤ K₂ + 5 Hz und K₂ die minimale Bemessungsbetriebsfrequenz des zweiten Außenlüftermotors ist.

6. Verfahren zum Steuern von Außenlüftermotoren einer Klimaanlage nach Anspruch 4, wobei 2 x fm ≤ fn ≤ 2 x fm + 5 Hz ist.

7. Verfahren zum Steuern von Außenlüftermotoren einer Klimaanlage nach Anspruch 3, wobei der Schritt des Erhöhens der Drehzahl des ersten Außenlüftermotors und der Drehzahl des zweiten Außenlüftermotors die folgenden Prozesse umfasst:
Beurteilen, ob der zweite Außenlüftermotor aufhört zu laufen oder nicht;
wenn der zweite Außenlüftermotor aufhört zu laufen, weiteres Beurteilen, ob die Arbeitsfrequenz f1 des ersten Außenlüftermotors größer als die Arbeitsfrequenz fp ist oder nicht: wenn ja, Reduzieren der Arbeitsfrequenz f1 des ersten Außenlüftermotors auf die Arbeitsfrequenz fq und Steuern des zweiten Außenlüftermotors, um gleichzeitig zu laufen; wenn nicht, Erhöhen der Arbeitsfrequenz f1 des ersten Außenlüftermotors;
wenn der zweite Außenlüftermotor nicht aufhört zu laufen, Erhöhen der Arbeitsfrequenz f1 des ersten Außenlüftermotors und der Arbeitsfrequenz f2 des zweiten Außenlüftermotors.

8. Verfahren zum Steuern von Außenlüftermotoren einer Klimaanlage nach Anspruch 7, wobei 2K₁ ≤ fp ≤ 2K₁ + 10 Hz und K₁ die minimale Bemessungsbetriebsfrequenz des ersten Außenlüftermotors ist.

9. Verfahren zum Steuern von Außenlüftermotoren einer Klimaanlage nach Anspruch 7, wobei K₁ ≤ fq ≤ K₁ + 5 Hz und K₁ die minimale Bemessungsbetriebsfrequenz des ersten Außenlüftermotors ist.

10. Verfahren zum Steuern von Außenlüftermotoren einer Klimaanlage nach Anspruch 1, wobei das Verfahren ferner den folgenden Prozess umfasst:
Messen einer aktuellen Drehzahl V1' des ersten Außenlüftermotors und einer aktuellen Drehzahl V2' des zweiten Außenlüftermotors;
Vergleichen der aktuellen Drehzahl V1' mit der geforderten Drehzahl V1 und Steuern der Drehzahl des ersten Außenlüftermotors gemäß dem ersten Geschwindigkeitsvergleichsergebnis; Vergleichen der aktuellen Drehzahl V2' mit der geforderten Drehzahl V2 und Steuern der Drehzahl des zweiten Außenlüftermotors gemäß einem zweiten Geschwindigkeitsvergleichsergebnis.

## Revendications

1. Procédé de commande de moteurs de ventilateur extérieur d'un climatiseur, le climatiseur comprend un premier moteur de ventilateur extérieur et un second moteur de ventilateur extérieur, dans lequel, le procédé comprend les étapes suivantes :
la détermination d'une vitesse de rotation requise V1 du premier moteur de ventilateur extérieur et d'une vitesse de rotation requise V2 du second moteur de ventilateur extérieur selon des états de fonctionnement du climatiseur ; la fourniture en sortie d'un premier signal de commande au premier moteur de ventilateur extérieur pour une fréquence de travail f1 correspondant à la vitesse de rotation requise V1, de façon à commander la rotation du premier moteur de ventilateur extérieur ; la fourniture en sortie d'un second signal de commande au second moteur de ventilateur extérieur pour une fréquence de travail f2 correspondant à la vitesse de rotation requise V2, de façon à commander la rotation du second moteur de ventilateur extérieur ; **caractérisé en ce que** la fréquence de travail f1 et la fréquence de travail f2 sont différentes à un même instant ;
et **en ce que** le procédé comprend en outre les étapes de :
mesure d'une pression d'extraction d'air P1 dans un état de refroidissement du climatiseur ou d'une pression d'aspiration d'air P2 dans un état de chauffage du climatiseur,
comparaison de la pression d'extraction d'air P1 mesurée ou de la pression d'aspiration d'air P2 mesurée avec une pression préétablie, et la commande de la vitesse de rotation du premier moteur de ventilateur extérieur et de la vitesse de rotation du second moteur de ventilateur extérieur selon un résultat de comparaison de pression.

2. Procédé de commande de moteurs de ventilateur extérieur d'un climatiseur selon la revendication 1, dans lequel, à un même instant, une différence entre la fréquence de travail f1 et la fréquence de travail f2 est d'au moins 1 Hz.

3. Procédé de commande de moteurs de ventilateur extérieur d'un climatiseur selon la revendication 1, dans lequel, l'étape de commande de la vitesse de rotation du premier moteur de ventilateur extérieur et de la vitesse de rotation du second moteur de ventilateur extérieur comprend les processus suivants :
la comparaison de la pression d'extraction d'air P1 mesurée avec une première pression préétablie variant dans une plage de [A1, B1], ou la comparaison de la pression d'aspiration d'air P2 mesurée avec une seconde pression préétablie variant dans une plage de [A2, B2] ;
lorsque P1 < A1, ou P2 > B2, la réduction de la vitesse de rotation du premier moteur de ventilateur extérieur et de la vitesse de rotation du second moteur de ventilateur extérieur ;
lorsque P1 > B1, ou P2 ≤ A2, l'augmentation de la vitesse de rotation du premier moteur de ventilateur extérieur et de la vitesse de rotation du second moteur de ventilateur extérieur.

4. Procédé de commande de moteurs de ventilateur extérieur d'un climatiseur selon la revendication 3, dans lequel, l'étape de réduction de la vitesse de rotation du premier moteur de ventilateur extérieur et de la vitesse de rotation du second moteur de ventilateur extérieur comprend les processus suivants :
le fait d'estimer si le second moteur de ventilateur extérieur arrête de fonctionner ou non ;
si le second moteur de ventilateur extérieur arrête de fonctionner, la réduction de la vitesse de rotation du premier moteur de ventilateur extérieur ;
si le second moteur de ventilateur extérieur n'arrête pas de fonctionner, le fait d'estimer en outre si la fréquence de travail f2 du second moteur de ventilateur extérieur est inférieure ou non à une fréquence de travail fm : dans l'affirmative, l'augmentation de la fréquence de travail f1 du premier moteur de ventilateur extérieur à une fréquence de travail fn, et la commande simultanée au second moteur de ventilateur extérieur d'arrêter de fonctionner ; dans la négative, la réduction de la fréquence de travail f1 du premier moteur de ventilateur extérieur et de la fréquence de travail f2 du second moteur de ventilateur extérieur.

5. Procédé de commande de moteurs de ventilateur extérieur d'un climatiseur selon la revendication 4, dans lequel K₂ ≤ fm ≤ K₂ + 5 Hz, et K₂ est la fréquence de travail nominale minimale du second moteur de ventilateur extérieur.

6. Procédé de commande de moteurs de ventilateur extérieur d'un climatiseur selon la revendication 4, dans lequel, 2 x fm ≤ fn ≤ 2 x fm + 5 Hz.

7. Procédé de commande de moteurs de ventilateur extérieur d'un climatiseur selon la revendication 3, dans lequel, l'étape d'augmentation de la vitesse de rotation du premier moteur de ventilateur extérieur et de la vitesse de rotation du second moteur de ventilateur extérieur comprend les processus suivants :
le fait d'estimer si le second moteur de ventilateur extérieur arrête de fonctionner ou non ;
si le second moteur de ventilateur extérieur arrête de fonctionner, le fait d'estimer en outre si la fréquence de travail f1 du premier moteur de ventilateur extérieur est supérieure ou non à une fréquence de travail fp : dans l'affirmative, la réduction de la fréquence de travail f1 du premier moteur de ventilateur extérieur à la fréquence de travail fq et la commande simultanée au second moteur de ventilateur extérieur de fonctionner ; dans la négative, l'augmentation de la fréquence de travail f1 du premier moteur de ventilateur extérieur ;
si le second moteur de ventilateur extérieur n'arrête pas de fonctionner, l'augmentation de la fréquence de travail f1 du premier moteur de ventilateur extérieur et de la fréquence de travail f2 du second moteur de ventilateur extérieur.

8. Procédé de commande de moteurs de ventilateur extérieur d'un climatiseur selon la revendication 7, dans lequel, 2K₁ ≤ fp ≤ 2K₁ + 10 Hz, et K₁ est la fréquence de travail nominale minimale du premier moteur de ventilateur extérieur.

9. Procédé de commande de moteurs de ventilateur extérieur d'un climatiseur selon la revendication 7, dans lequel, K₁ ≤ fq ≤ K₁ + 5 Hz, et K₁ est la fréquence de travail nominale minimale du premier moteur de ventilateur extérieur.

10. Procédé de commande de moteurs de ventilateur extérieur d'un climatiseur selon la revendication 1, dans lequel le procédé comprend en outre les processus suivants :
la mesure d'une vitesse de rotation réelle V1' du premier moteur de ventilateur extérieur et d'une vitesse de rotation réelle V2' du second moteur de ventilateur extérieur ;
la comparaison de la vitesse de rotation réelle V1' avec la vitesse de rotation requise V1, et la commande de la vitesse de rotation du premier moteur de ventilateur extérieur selon un premier résultat de comparaison de vitesse ; la comparaison de la vitesse de rotation réelle V2' avec la vitesse de rotation requise V2, et la commande de la vitesse de rotation du second moteur de ventilateur extérieur selon un second résultat de comparaison de vitesse.
